Europäisches Patentamt

European Patent Office

Office européen des brevets

(19)

(11) Veröffentlichungsnummer: **0 010 600**
**B1**

(12) **EUROPÄISCHE PATENTSCHRIFT**

(45) Veröffentlichungstag der Patentschrift: **09.03.83**

(51) Int. Cl.³: **H 04 B 1/66**

(21) Anmeldenummer: **79103407.7**

(22) Anmeldetag: **12.09.79**

(54) Verfahren zur codierten Übertragung von Sprachsignalen, Verwendung des Verfahrens in einem Zeitmultiplex-Übertragungssystem und Anordnung zur Durchführung des Verfahrens.

(30) Priorität: **27.10.78 CH 11115/78**

(43) Veröffentlichungstag der Anmeldung:
**14.05.80 Patentblatt 80/10**

(45) Bekanntmachung des Hinweises auf die Patenterteilung:
**09.03.83 Patentblatt 83/10**

(84) Benannte Vertragsstaaten:
**DE FR GB**

(56) Entgegenhaltungen:
DE - B - 1 296 212
FR - A - 1 152 534
US - A - 3 659 052
US - A - 3 772 458

ELECTRONICS LETTERS, Vol. 10, Nr. 7, 4. April 1974, London, GB, HOLMES: "Variable-frame-rate coding scheme for speech-analysis/synthesis systems", Seiten 101, 102

(73) Patentinhaber: **International Business Machines Corporation**
**Armonk, N.Y. 10504 (US)**

(72) Erfinder: **Schindler, Hans Rudolf**
**Wildenbühlstrasse 40**
**CH-8135 Langnau/ZH (CH)**
Erfinder: **Vettiger, Peter**
**Langmoosstrasse 33**
**CH-8135 Langnau/ZH (CH)**

(74) Vertreter: **Möhlen, Wolfgang C., Dipl.-Ing.**
**Säumerstrasse 4**
**CH-8803 Rüschlikon (CH)**

(56) Entgegenhaltungen:
1978 IEEE INTERNATIONAL CONFERENCE ON ACOUSTICS, SPEECH & SIGNAL PROCESSING, Camelot Inn, Tulsa, Oklahoma, 10—12, April 1978, ALSUP: "Two-dimensional speech compression", Seiten 341—344

EP 0 010 600 B1

# 0 010 600

Verfahren zur codierten Übertragung von Sprachsignalen, Verwendung des Verfahrens in einem Zeitmultiplex-Übertragungssystem und Anordnung zur Durchführung des Verfahrens

Die Erfindung betrifft ein Verfahren zur codierten Uebertragung von Sprachsignalen, bei welchem durch Vergleich einander ähnliche Abschnitte innerhalb eines Sprachsignals ermittelt und bei welchem ausgewählte Abschnitte eines Sprachsignals nicht übertragen und am Empfangsort durch vorangehende, gespeicherte ähnliche Abschnitte des gleichen Signals ersetzt werden, sowie eine Verwendung des Verfahrens und eine Anordnung zur Durchführung des Verfahrens.

Da normale Sprachsignale viel Redundanz sowie auch Intervalle ohne Information enthalten, kann man durch Verminderung der überflüssigen Signalanteile eine erhöhte Ausnutzung der Uebertragungskapazität vorhandener Kanäle erreichen. Auf einer Fernleitung braucht man dann z.B. weniger Multiplexkanäle (d.h. Zeitschlitze in periodischen Zeitrahmen) als die Gesamtzahl von zu übertragenden Sprachsignalen.

Zur Redundanzverminderung sind zahlreiche Verfahren und Einrichtungen bekannt. Eine Methode besteht darin, von allen angeschlossenen Spracheingangskanälen nur jeweils denen einen Fernleitungskanal für eine Periodendauer (z.B. 6 ms) zuzuordnen, über welche gerade ein wirklich "aktives" Sprachsignal eintrifft. Sobald der Sprecher schweigt, wird dem Eingangskanal der Fernleitungskanal wieder entzogen. Systeme, bei denen diese Methode angewandet wird, sind z.B. beschrieben in den US—Patentschriften 4'032'719, 4'009'343 und 3'644'680 sowie in einem Aufsatz von K. Bullington et al. "Engineering aspects of TASI", Bell System Techn. Journal, März 1959, pp. 353—364. Eine Schwierigkeit bei den Methoden mit sprachaktivitätsgesteuerter Kompression besteht darin, dass bei hoher Belastung ein sogenannter "freezeout" auftritt, d.h. dass einzelnen Sprachsignalen trotz Aktivstatus zeitweise kein Fernleitungskanal mehr zugeteilt wird. Ausserdem können beim Wiederzuteilen eines Fernleitungskanals nach einer Pause Verzögerungen entstehen. Diese Erscheinungen können schliesslich zu einer Verminderung der Sprachqualität führen. Ueberdies werden bei dieser Methode für alle Eingangskanäle Aktivitätsdetektoren benötigt.

Eine andere Möglichkeit zur Verminderung der benötigten Uebertragungskapazität besteht darin, bei der codierten Uebertragung von Sprachsignalen solche Abtastwerte auszulassen, die dem jeweils vorher übertragenen Abtastwert gleich oder sehr ähnlich sind, und statt dessen am Empfangsort den zuletzt übertragenen Abtastwert nochmals, evtl. sogar mehrmals zu verwenden. Verfahren, welche dieses Prinzip benutzen, sind z.B. bekannt aus folgenden Publikationen: R. Woitowitz: "Ein Redundanzminderndes Sprachmultiplexverfahren mit momentaner Prioritätszuteilung", Proceedings, 1974, International Zurich Seminar on Digital Communications, Vortrag A3. J. A. Sciulli et al.: "A speech predictive encoding communication system for multichannel telephony", IEEE Transactions on Communications, Vol. COM-21 (1973), Seiten 827—835.

Die Einrichtungen zum Feststellen der Gleichheit oder Aehnlichkeit einzelner codierter Abtastwerte und zum Speichern und Wiedereinsetzen früherer Abtastwerte im Empfänger sind für diese Verfahren zwar relativ einfach. Da sich aber das Auslassen und Wiedereinsetzen auf einzelne Abtastwerte bezieht, muss die Signalisierungsinformation, welche zur Ausnutzung der freiwerdenden Zeitschlitze benötigt wird, in Form von Zuordnungsmasken oder Adressen in jedem Abtastintervall übertragen werden. Dies erfordert einen erheblichen Teil der Kanalkapazität (in einem Fall 25%), so dass der durch Redundanzminderung mögliche Gewinn an Uebertragungskapazität wieder stark verringert wird. Aussderdem werden bei diesen Verfahren mit Behandlung von einzelnen. Abtastwerten die Signale grosser Amplitude bevorzugt.

Der Aufsatz "Adaptive predictive speech coding based on pitch-controlled interruption/reiteration techniques" von A. Frei et al., veröffentlicht in den Proceedings der IEEE 1973, International Conference on Communications, Seiten 46—12 bis 46—16, beschreibt ein Verfahren, in dem für die Uebertragung der Stimmhaften Teile eines Sprachsignals jeweils nur eine Grundtonperiode als deltacodiertes Signal übertragen wird, und bei dem in Empfänger dieser Signalabschnitt variabler Länge in einem Schieberegister gespeichert und bei der Ausgabe mehrfach wiederholt wird. Die benötigte Angabe über die Grundtonperiode wird durch einen besonderen Korrelator gewonnen, der einen deltacodierten Signalausschnitt (Fenster) mit einem verzögerten Signalausschnitt des gleichen Signals vergleicht. (Ein solcher Grundtonperioden-Detektor ist z.B. auch im Schweizer Patent Nr. 594849 beschrieben). Dieses Uebertragungsverfahren hat den Nachteil, dass mit Abschnitten variabler Länge gearbeitet werden muss, da sich die Grundtonperiode und damit die Länge des zu übertragenden Signalintervalls sowie die Arbeitslänge des Schieberegisters laufend ändert. Für die Uebertragung von Einzelsignalen ist dies tragbar, jedoch nicht bei der Zeitmultiplexübertragung einer Vielzahl von Sprachsignalen im Synchronbetrieb (Zeitrahmen fester Länge). Andere Nachteile sind das Auftreten von echoähnlichen Effekten bei hoher Wiederholungsrate und von Rumpelstörungen infolge von Uebergangseffekten (Transienten) bei Abwandern der Grundtonfrequenz.

Aus der US—A—3 659 052 ist auch eine Anordnung bekannt, in der zur Redundanzverminderung bei der Sprachsignalübertragung festgestellt wird, ob ein Sprachsignal unmittelbar aufeinanderfolgende ähnliche Abschnitte enthält, und bei dem dann nur ein solcher Abschnitt übertragen und am Empfangsort einmal oder mehrfach wiederholt wird, um nicht übertragene ähnliche Abschnitte zu ersetzen. Hierbei ist aber die Länge der ausgewählten Abschnitte vom

# 0 010 600

Sprachsignal abhängig, d.h. sie variiert laufend. Auch steht der Anfangszeitpunkt einer Serie von ähnlichen Abschnitten, von denen nur einer übertragen werden soll, in keiner Beziehung zu einem System-Zeitraster. Diese Tatsachen sind von Nachteil in einem digitalen Uebertragungssystem, das mit festem Zeitraster arbeiten muss. Insbesondere ist auch die ständig variierende Abschnittslänge sowie die willkürliche Lage des jeweiligen Anfangszeitpunkts von Nachteil für die Multiplex-Zusammenfassung einer Mehrzahl von Signalen bei der Uebertragung.

In der DE—B—1 296 212 ist ein Verfahren zur Uebertragung von Sprachsignalen mit verminderter Bandbreite beschrieben, das auch auf einer Auswertung der Pitch-Perioden (Grundtonperioden) beruht. Die Pitch-Perioden werden mit gespeicherten Mustern verglichen, und es wird dann statt jeder Pitch-Periode ein Codewort übertragen, mit dem am Empfangsort wieder ein entsprechendes gespeichertes Muster abgerufen wird. Dies erfordert die Speicherung einer sehr grossen Anzahl Muster und jedesmal eine entsprechende Anzahl von Vergleichen, da ja jedesmal sämtliche möglichen Muster berücksichtigt werden müssen. Ausserdem liegt bei diesem Verfahren wie bei den beiden vorher erwähnten Fällen eine Abhängigkeit von der variablen Gruntonperiode und dem beliebigen Einsatzpunkt der Grundtonperioden vor. Falls man diese nicht berücksichtigt, erhöht sich die ohnehin grosse Anzahl von zu speichernden Mustern und erforderlichen Vergleichen noch um ein Vielfaches.

Der Artikel "Variable-frame-rate coding scheme for speech-analysis/synthesis systems" von J. N. Holmes, publiziert in Electronics Letters, 4. April 1974, Vol. 10, No. 7, Seiten 101 and 102 beschreibt ein Verfahren, bei dem zur Uebermittlung von Sprachsignalen nur ausgewählte Rahmen aus einer Rahmenfolge übertragen werden und bei dem im Empfänger die fehlenden, nicht übertragenen Rahmen entweder durch Wiederholung oder Interpolation ersetzt werden. Die Rahmen enthalten Sprachinformation, die bereits von einem Vocoder verarbeitet worden ist, und erfordern auch im Empfänger eine Wiederverarbeitung mittles Vocoder. Ohne diese zusätzliche Verarbeitung ist eine Wiederholung oder Interpolation zum Ersatz nicht übertragener Rahmen schwer möglich, d.h. aus einem normalen, einfach codierten Sprachsignal können vorgegebene Rahmen nicht einfach weggelassen und durch Wiederholung oder Interpolation ersetzt werden.

Der Erfindung liegt die Aufgabe zugrunde, ein Verfahren zur Redundanzreduktion bei der Uebertragung von Sprachsignalen zu schaffen, das die Aehnlichkeit von Signalabschnitten innerhalb eines Sprachsignals ausnützt, um selektiv einzelne Abschnitte bei der Uebertragung zu unterdrücken, das aber andererseits nicht von der zeitlichen Unregelmässigkeit solcher Abschnitte oder Aehnlichkeiten abhängt, sondern in einem System-Zeitraster mit festen Rahmenperioden arbeitet und damit unter anderem auch für Multiplex-Uebertragung besonders geeignet ist. Das Verfahren soll für normal codierte Sprachsignale geeignet sein und keine zusätzliche Vor- oder Nachverarbeitung der Sprachsignale durch Vocoder oder Interpolatoren erforderlich machen. Ausserdem soll das Verfahren mit der Speicherung eines begrenzten Intervalls jedes zu übertragenden Sprachsignals auskommen und keine zusätzlichen gespeicherten Referenz- oder Musterinformationen benötigen.

Weitere Aufgaben der Erfindung sind die Angabe einer vorteilhaften Verwendung des Verfahrens in einem Zeitmultiplex-Uebertragungssystem für die zusammengefasste Uebertragung einer Gruppe von Sprachsignalen, sowie die Schaffung einer Anordnung zur Durchführung des Verfahrens.

Der Gegenstand der Erfindung ist in den Patentansprüchen dargestellt.

Das erfindungsgemässe Verfahren benötigt zwar einen erhöhten Aufwand an Verarbeitungs- und Speichervorrichtungen. Dieser wird aber durch eine erhebliche Verminderung der erforderlichen Uebertragungskapazität kompensiert, was bei Systemen mit teuren Uebertragungskanälen wichtig ist, also z.B. besonders bei Satellitensystemen.

Das Verfahren hat ausserdem den Vorteil, dass es mit verschiedenen anderen Verfahren zur Redundanzreduktion, insbesondere mit sprachaktivitätsgesteuerter Kompression, kombiniert werden kann, um in den Fällen, wo diese ihre Grenzen erreichen, noch eine weitere Kompression zur zusätzlichen Verbesserung des Systemwirkungsgrades zu erreichen.

Ein Ausführungsbeispiel der Erfindung wird im folgenden anhand von Zeichnungen beschrieben. Es zeigt:

Fig. 1 Sprachsignaldiagramme zur Veranschaulichung des erfindungsgemässen Verfahrens zum Unterdrücken and Wiedereinsetzen eines Segmentes,

Fig. 2 Sprachsignaldiagramme zur Veranschaulichung der Korrelationsoperationen,

Fig. 3 Blockdiagramm einer Eingangsanordnung mit Speicher- und Korrelationseinrichtungen zur Durchführung des erfindungsgemässen Verfahrens,

Fig. 4 Diagramme zur Veranschaulichung der Lese- und Schreibsequenzen im Eingangsspeicher der Fig. 3,

Fig. 5 Blockdiagramm des Korrelators mit Ergebnisspeicher der Fig. 3,

Fig. 6 Blockdiagramm einer Sendeanordnung zur Zusammenfassung mehrerer Gruppen von Sprachsignalkanälen, mit Einrichtungen zur erfindungsgemässen Uebertragung,

Fig. 7 Blockdiagramm einer Empfangsanordnung mit Demultiplexer und Sprachsignalspeichern für erfindungsgemässe Wiederherstellung der Sprachsignale, und

Fig. 8 Blockdiagramm eines Speichers gemäss Fig. 7 mit Steuer- und Verarbeitungseinrichtungen zum Wiedereinsetzen unterdrückter Sprachsignalsegmente.

Prinzip der Erfindung

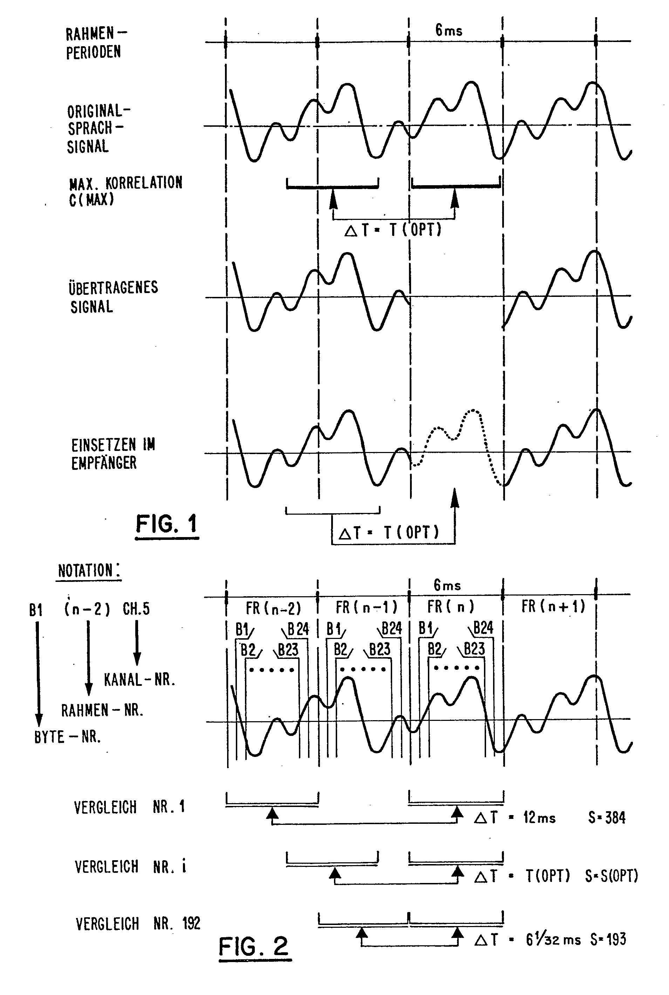

Anhand von Fig. 1 wird zunächst das Prinzip des erfindungsgemässen Verfahrens erläutert.

Es wird davon ausgegangen, dass die Sprachübertragung in Segmenten fester Länge (Dauer) erfolgt, dass also jeweils ein Signalabschnitt gemäss einem festen Zeitraster codiert und (als Block) übertragen wird. Das ist z.B. in Satellitensystemen der Fall, wobei die Blocklänge (das Zeitraster) 6 ms beträgt. Ausserdem wird vorausgesetzt, dass eine Vielzahl von Signalen auf einer Leitung im Zeitmultiplex gemeinsam übertragen wird.

Die Sprachsignale bestehen (mindestens für die Vokale) aus periodischen Schwingungen, wobei die Grundton-Periode variabel ist, sich aber nur langsam ändert, und ihre Dauer vom jeweiligen Laut und vom Sprecher abhängt.

Die Erfindung geht nun von dem Gedanken aus, bei der Uebertragung einzelne Signalabschnitte (Segmente) selektiv zu unterdrücken, um damit Uebertragungskapazität einzusparen, und diese unterdrücken Segmente am Empfangsort durch bereits übertragene ähnliche Signalabschnitte zu ersetzen.

Mit der Erfindung wird vorgeschlagen, für jedes neu zusammengestellte Segment des Sprachsignals innerhalb der letzten beiden, gespeicherten Segmente durch Vergleich denjenigen gleichlangen Signalausschnitt zu finden, welcher zum neuen Segment die beste Korrelation C(MAX) hat, sowie die Zeitverschiebung ΔT=T(OPT) zwischen diesem optimal korrelierten Ausschnitt und dem neuen, noch zu übertragenden Segment festzustellen. (Die in Klammern verwendeten Bezeichnungen MAX und OPT sind hier als Index zu verstehen und nicht als unabhängige Variable.) Bei Bedarf kann dann das neue Segment im übertragenen Signal unterdrückt und am Empfangsort durch einen Ausschnitt aus dem vorher übertragenen Signal ersetzt werden. Hierzu ist lediglich die Speicherung der zwei jeweils zuletzt übertragenen Sprachsignalsegmente am Empfangsort sowie die Uebertragung einer Angabe über die Zeitverschiebung ΔT=T(OPT) notwendig.

Die drei Vorgänge a) Auffindung des optimal korrelierten Signalausschnittes und bestimmung von T(OPT), b) Auslassung eines Segmentes bei der Uebertragung, und c) Ausfüllen der entstandenen Lücke durch einen früher bereits übertragenen Signalausschnitt, sind in Fig. 1 schematisch dargestellt.

Erfindungsgemäss wird diese Lösung in einem System mit Multiplexübertragung einer Vielzahl von Sprachsignalen eingesetzt. Dabei wird für jedes neue Segment eines jeden Sprachsignals nicht nur die Zeitverschiebung ΔT=T(OPT), sondern auch ein Mass für die Korrelation C(MAX) zwischen den beiden Signalintervallen (dem neuen Segment und dem bestkorrelierten älteren Signalausschnitt) ermittelt. Damit ist es möglich, aus vielen Signalen diejenigen für eine Signalunterdrückung auszuwählen, welche momentan die beste Korrelation haben, während man die relativ am schlechtesten korrelierten Signale unverändert (d.h. ohne Unterdrückung eines Segmentes) überträgt.

Bei der erfindungsgemässen Lösung wird also für jedes einzelne Signal für jede Rahmenperiode die Zeitverschiebung T(OPT) für die optimale Korrelation C(MAX) neu ermittelt. Ausserdem wird für die Gesamtheit der im Multiplex zu übertragenden Signale in jeder Rahmenperiode die Reihenfolge ihrer Korrelationswerte C(MAX) nach der Grösse festgestellt.

Vorgang der Korrelation

Mit Hilfe von Fig. 2 soll nun kurz für ein einzelnes Signal der Vergleichsvorgang zur Ermittlung des Signalausschnittes mit der maximalen Korrelation und der betreffenden Zeitverschiebung T(OPT), d.h. der Grundton-Periode erläutert werden.

Es wird davon ausgegangen, dass das Sprachsignal in abgetasteter, codierter Form vorliegt (im Beispiel: Delta-Codierung). Jedes einer Rahmenperiode von 6 ms entsprechende Segment des Sprachsignals enthält 192 Abtastwerte, wobei die Abtastwerte in 24 Bytes zu je 8 Bit gruppiert sind. Die 192 Bit pro Periode von 6 ms erlauben also eine Abtastrate von 32 KHz.

Das neue codierte Sprachsegment muss nun mit einem gleichlangen Fenster oder Signalausschnitt verglichen werden, welcher aus den beiden letzten codierten Segmenten des gleichen Signals ausgewählt ist, wobei nach jedem Vergleichsvorgang eine Verschiebung des Fensters um einen Schritt (1 Bit) erfolgt. Insgesamt müssen also 192 Vergleiche erfolgen; beim ersten wird der Block FR(n) mit dem Block FR(n—2) verglichen, beim letzten mit einem Block, der fast gleich FR(n—1) ist. Die Vergleichsoperation besteht darin, festzustellen, wieviele der einander entsprechenden 192 Bits in beiden Blöcken gleich sind. Absolute Gleichheit ergibt also einen Korrelationswert 192, völlige Verschiedenheit dagegen (z.B. ein Block lauter Nullen, der andere lauter Einsen) ergibt einen Korrelationswert 0.

Die Zusammenhänge zwischen den Vergleichen veranschaulicht folgende Tabelle:

4

| Vergleich Nr. (i) | Zeitverschiebung $\Delta T$ | | Verschiebung S (Anzahl Bits) | Normierte Verschiebung S' | Korrelationswert $C_i(0 \leq Ci \leq 192)$ |
|---|---|---|---|---|---|
| 1 | 12 | ms | 384 | 192 | $C_1$ |
| 2 | (11+31/32) | ms | 383 | 191 | $C_2$ |
| 3 | (11+30/32) | ms | 382 | 190 | $C_3$ |
| . | . | | . | | . |
| . | . | | . | | . |
| . | . | | . | | . |
| 190 | (6+3/32) | ms | 195 | 003 | $C_{190}$ |
| 191 | (6+2/32) | ms | 194 | 002 | $C_{191}$ |
| 192 | (6+1/32) | ms | 193 | 001 | $C_{192}$ |

Das Ergebnis der Korrelation ist also eine Liste von 192 verschiedenen Korrelationswerten, die den 192 möglichen Zeitverschiebungen $\Delta T$, die auch als Bitverschiebungszahl S ausgedrückt werden können, entsprechen. Diese Korrelationsfunktion hat ein deutliches Maximum, dessen Position der Gruntonperiode (Pitch-Periode) entspricht.

Man kann nun wahlweise statt des neuen Sprachsignalsegments nur eine Angabe über den ermittelten optimalen Verschiebungswert T(OPT) bzw. S(OPT) übertragen, und hat dann die Möglichkeit, im Empfänger aus den gespeicherten beiden vorangegangenen Sprachsignalsegmenten denjenigen Ausschnitt zum Ausfüllen der entstandenen Lücke auszuwählen welcher dieser Verschiebung entspricht. Er sollte die Lücke optimal ausfüllen.

Ausführungsbeispiel

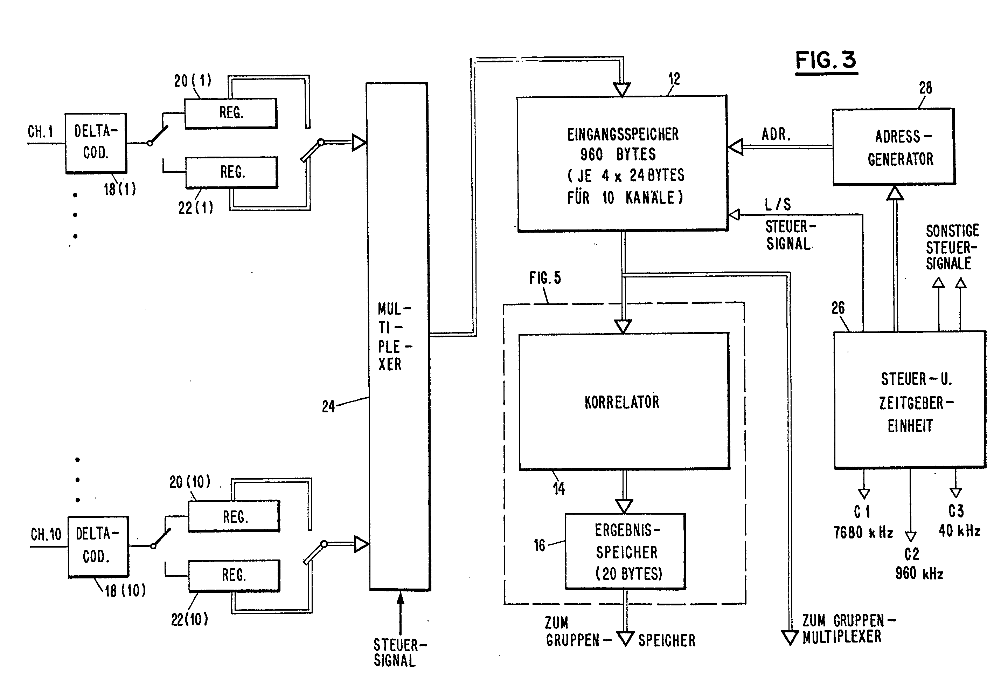

Anhand der Fig. 3 bis 5 wird nun ein Ausführungsbeispiel für einen Korrelator beschrieben, der für eine Mehrzahl von Kanälen (im Beispiel zehn) im Zeitmultiplex benützt wird. Fig. 3 zeigt im Blockdiagramm den Datenfluss von den zehn Kanälen CH.1 ... CH.10 über einen gemeinsamen Eingangsspeicher 12 und den Korrelator 14 zum Ergebnisspeicher 16. Für jeden der zehn CH.1 ... CH.10 ist ein Deltacodierer 18 vorgesehen, dessen Ausgangsbitfolge abwechselnd in eines der beiden Register 20, 22 gelangt. Diese Register dienen als Serien-Parallel-Umsetzer. Die jeweils gefüllten Register werden über eine 8-Bit-Busleitung und einen gemeinsamen Multiplexer 24 nacheinander mit dem Eingangsspeicher 12 verbunden, um jeweils ein Byte pro Kanal zu speichern. Die Adressierung erfolgt über einen mit einer Steuereinheit 26 verbundenen Adressgenerator 28. Die Steuereinheit 26 erzeugt auch drei Taktsignale C1 ... C3 für die Speicherzugriffe und die Korrelationsoperationen.

Der Eingangsspeicher kann für jeden der zehn Kanäle vier aufeinanderfolgende Sprachsignalsegmente, also die Information für vier Zeitrahmen, speichern. Da für jeden Kanal pro Segment (Zeitrahmen) 192 Bit, d.h. 24 Byte, benötigt werden, ist insgesamt eine Kapazität von 960 Byte erforderlich. Aus praktischen Gründen wird man einen Block von 1024 Byte (1k Byte) verwenden, der mit 10 Bit adressierbar ist.

Während die Daten für den nächsten Zeitrahmen n+1 eingelesen werden, entnimmt man dem Speicher die Werte für den zuletzt eingelesenen Zeitrahmen n, um sie mit denen der beiden vorhergehenden, auch noch gespeicherten Zeitrahmen n−1 und n−2 im Korrelator 14 zu korrelieren. Die Adressierung erfolgt auch hierfür über die Adressierschaltung 28.

Die Adressier-Reihenfolge für das Einschreiben ist eine andere als für das Auslesen aus folgendem Grunde: Die an den Eingangskanälen anfallenden Bytes müssen laufend abgenommen werden, d.h. die Eingänge müssen zyklisch bedient werden. Bei der Auswertung, d.h. Korrelation, verwendet man aber alle akkumulierten, zu einem Zeitrahmen gehörenden Werte eines Kanals, bevor man zum nächsten Kanal (jedoch für den gleichen Zeitrahmen) übergeht.

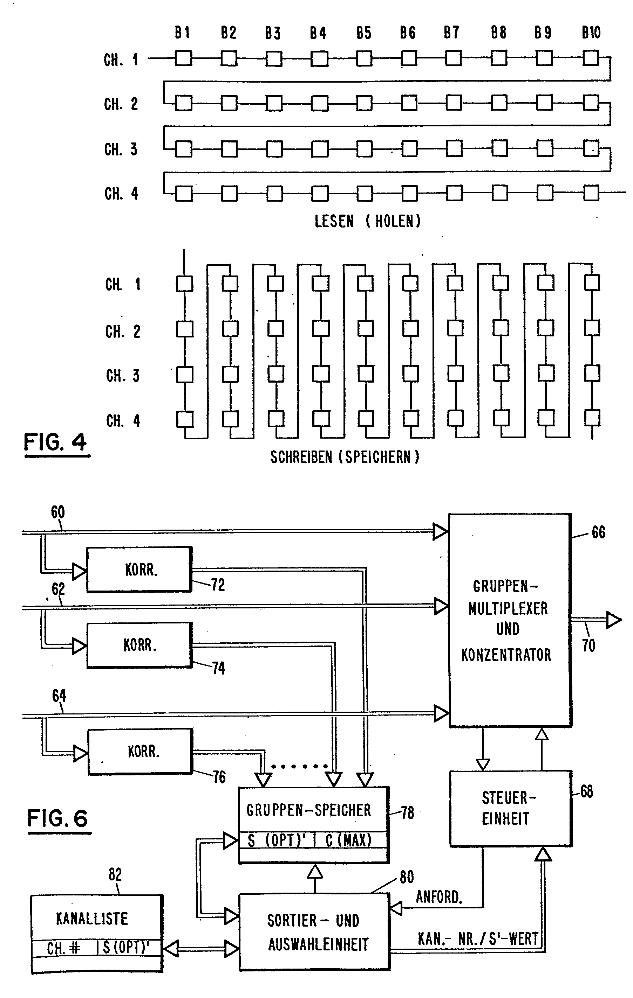

Fig. 4 veranschaulicht dies, wobei zur Vereinfachung nur vier Kanäle und zehn Bytes je Rahmen und Kanal dargestellt wurden. Beim Einschreiben speichert man also erst das erste Byte für alle Kanäle, dann das zweite Byte für alle Kanäle usw. Beim Auslesen dagegen holt man nacheinander alle Bytes für den ersten Kanal, dann alle Bytes für den zweiten Kanal usw. Wie schon weiter oben gesagt, werden die Einschreibe- und Lesevorgänge aber abwechselnd, d.h. miteinander verzahnt, ausgeführt.

Die Sequenzen und Zeitverhältnisse bei den Korrelations- und Speicheroperationen werden aus folgender Tabelle I im Zusammenhang mit Fig. 2 deutlich. Die dabei verwendete Notation für die einzelnen Bytes ist auch aus Fig. 2 ersichtlich.

**TABELLE I**

| Zyklus-Nr. | | | Geholtes Byte | Eingespeichertes Byte |
|---|---|---|---|---|
| Kanal | Byte | Vergleich | Verglichen mit (192 Vergleiche mit je 8 Bits aus 25 Bytes) | |
| 1 | 1 | 001 ... 192 | B1 (n) CH.1 <br> B1(n—2) CH.1 <br> B2 (n—2) CH.1 <br> . . . . <br> B23 (n—2) CH.1 <br> B24 (n—2) CH.1 <br> B1 (n—1) CH.1 | B1 (n+1) CH.1 |
| 1 | 2 | 193 ... 384 | B2 (n) CH.1 <br> B2 (n—2) CH.1 <br> B3 (n—2) CH.1 <br> . . . <br> B24 (n—2) CH.1 <br> B1 (n—1) CH.1 <br> B2 (n—1) CH.1 | B1 (n+1) CH.2 |
| 1 | 3 | 385 ... 576 | B3 (n) CH.1 <br> B3 (n—2) CH.1 <br> . . . <br> B3 (n—1) CH.1 | B1 (n+1) CH.3 |
| . | | . | . | . |
| . | | . | . | . |
| . | | . | . | . |
| 1 | 10 | 1729 ... 1920 | B10 (n) CH.1 <br> B10 (n—2) CH.1 <br> . . . <br> B10 (n—1) CH.1 | B1 (n+1) CH.10 <br> ------------- |
| 1 | 11 | 1921 ... 2112 | B11 (n) CH.1 <br> B11 (n—2) CH.1 <br> . . . <br> B11 (n—1) CH.1 | B2 (n+1) CH.1 |
| . | | . | . | . |
| . | | . | . | . |
| . | | . | . | . |
| 1 | 24 | 4417 ... 4608 | B24 (n) CH.1 <br> B24 (n—2) CH.1 <br> B1 (n—1) CH.1 <br> . . . <br> B23 (n—1) CH.1 <br> B24 (n—1) CH.1 <br> ------------- | B3 (n+1) CH.4 |
| 2 | 1 | 001 ... 192 | B1 (n) CH.2 <br> B1 (n—2) CH.2 <br> . . . <br> B1 (n—1) CH.2 | B3 (n+1) CH.5 |
| . | | . | . | . |
| . | | . | . | . |
| . | | . | . | . |

**TABELLE I (cont.)**

| Zyklus-Nr. | | | Geholtes Byte | Eingespeichertes Byte |
|---|---|---|---|---|
| Kanal | Byte | Vergleich | Verglichen mit (192 Vergleiche mit je 8 Bits aus 25 Bytes) | |
| 10 | 23 | 4225...4416 | B23 (n) CH.10 <br> B23 (n—2) CH.10 <br> B24 (n—2) CH.10 <br> B1 (n—1) CH.10 <br> ... <br> B23 (n—1) CH.10 | B24 (n+1) CH.9 |
| 10 | 24 | 4417...4608 | B24 (n) CH.10 <br> B24 (n—2) CH.10 <br> B1 (n—1) CH.10 <br> ... <br> B24 (n—1) CH.10 | B24 (n+1) CH.10 |
| 1 | 1 | 001...192 | B1 (n+1) CH.1 <br> B1 (n—1) CH.1 <br> B2 (n—1) CH.1 <br> ... <br> B24 (n—1) CH.1 <br> B1 (n) CH.1 | B1 (n+2) CH.1 |
| 1 | 2 | 193...384 | B2 (n+1) CH.1 <br> B2 (n—1) CH.1 <br> ... <br> B2 (n) CH.1 | B1 (n+2) CH.2 |
| | . <br> . <br> . | . <br> . <br> . | . <br> . <br> . | . <br> . <br> . |

Zykluszeiten

a) Ein Kanalzyklus mit 24 Bytezyklen für je 192 Vergleiche dauert 600 $\mu s$

b) Ein Bytezyklus mit 192 Vergleichen dauert 25 $\mu s$ (Taktsignal C3=40 KHz)

c) Nachschieben einer weiteren 8-Bit-Gruppe (d.h. eines Byte) nach je 8 Vergleichen, d.h. alle 1,04 $\mu s$ (Taktsignal C2=960 KHz)

d) Ein Vergleichszyklus dauert 130 ns (Taktsignal CI=7680 KHz)

Alle Vergleiche werden zuerst für Kanal 1 durchgeführt. Als erstes wird das Byte B1 (n) CH.1 geholt und mit einem 8-Bit-Fenster verglichen, das über 192 verschiedene Positionen vom Byte B1 (n—2) CH.1 bis zum Byte B1 (n—1) CH.1 verschoben wird. In dieser Zeit wird nur ein Byte des nächsten Rahmens gespeichert, nämlich B1 (n+1) CH.1. Danach wird das Byte B2 (n) CH.1 geholt und wieder 192 Vergleichsoperationen unterzogen, diesmal mit einer Fensterverschiebung von B2 (n—2) CH.1 bis B2 (n—1) CH.1. Die sich ergebenden Zwischenergebnisse werden mit den bereits vorhandenen zu 192 neuen Zwischenergebnissen kumiliert. Während dieser Zeit wird ein einziges weiteres Byte für den nächsten Rahmen eingelesen, nämlich B1 (n+1) CH.2. So geht es weiter für Kanal 1 wie in der Tabelle I angedeutet, bis alle 24 Bytes korreliert sind und das Ergebnis für Kanal 1 und Rahmen n im Speicher vorliegt.

Dann wird mit der Korrelation zu Kanal 2 übergegangen. Das Einschreiben geschieht synchron, aber mit zyklischer Bedienung aller Kanäle.

Korrelator und ergebnisspeicher

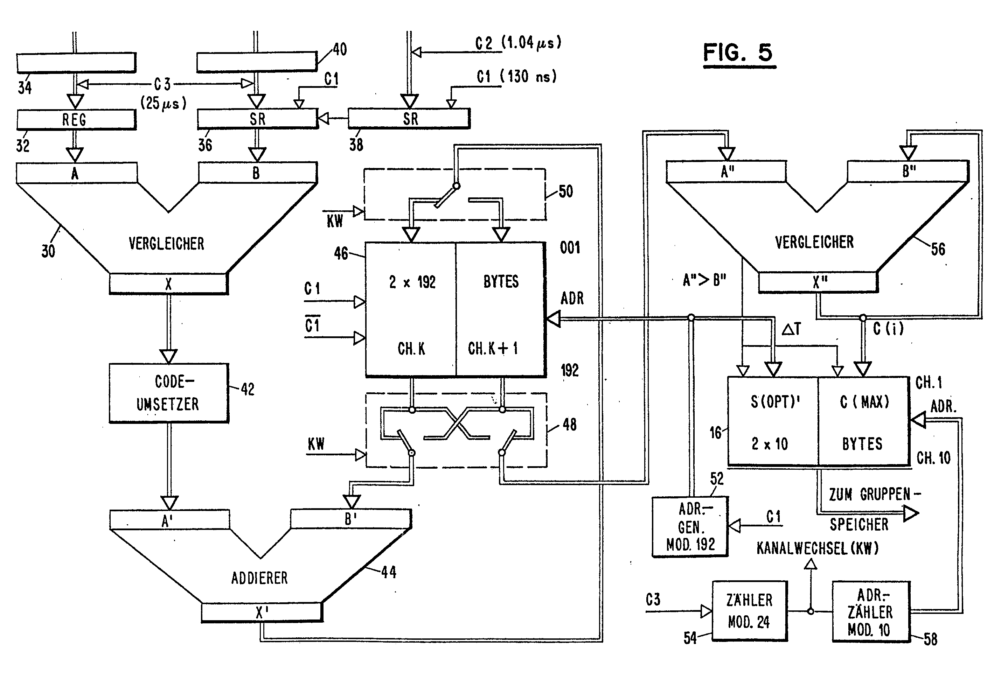

Einzelheiten des Korrelators 14 und des Ergebnisspeichers 16 von Fig. 2 sind in Fig. 5 gezeigt und werden anschliessend erläutert, wobei Tabelle I zum besseren Verständnis helfen kann.

Der Vergleich zur Korrelation erfolgt byteweise in einem Vergleicher 30, der z.B. aus acht Antivalenzschaltungen besteht. Das 8-Bit-Ausgangsfeld am Ausgang X gibt an, in welchen Bitpositionen die 8-Bit-Eingangsfelder an den Eingängen A und B gleiche Binärwerte enthalten. Am

7

**0 010 600**

Eingang A befindet sich ein 8-Bit-Register 32 mit vorgeschaltetem Puffer 34, am Eingang B zwei zusammenhängende Schieberegister 36 und 38, die parallel geladen werden können. Dem Schieberegister 36 ist noch ein Puffer 40 vorgeschaltet. Die Arbeitsweise dieser Eingaberegister wird weiter unten erläutert. Mit dem Ausgang des Vergleichers 30 ist ein Codeumsetzer 42 (Festspeicher oder Codierbaum) verbunden, der das 8-Bit-Vergleichsergebnis in eine Digitaldarstellung umwandelt, welche die Anzahl übereinstimmender Bits der Eingangs felder an den Eingängen A und B angibt (also $0\ldots8$).

Zur Akkumulation der Korrelationswerte $C(i)$, getrennt nach normierten Verschiebungswerten $S'$ (wobei $S'=S-192$), ist ein Addierer 44 und ein Speicher 46 mit zwei gleichen Bereichen vorgesehen. Der Eingang $A'$ des Addierers ist mit dem Ausgang des Codeumsetzers 42 verbunden. Der Eingang $B'$ kann über eine erste Umschalteinrichtung 48 abwechselnd mit dem Ausgang je einer Hälfte des Speichers 46, und der Ausgang $X'$ über eine zweite Umschalteinrichtung 50 abwechselnd mit dem Eingang der gleichen Hälfte des Speichers 46 verbunden werden. Jede der beiden Speicherhälften umfasst 192 Bytepositionen von je 8 Bits.

Zur zyklischen sequentiellen Adressierung aller Speicherplätze beider Hälften ist ein Adressgenerator 52 vorhanden. Ein Modulo-24-Zähler 54 wird durch jeden Impuls des Taktsignals C3 (alle 25 $\mu$s) jedesmal weitergeschaltet, wenn ein neuer Vergleichszyklus für ein Byte gestartet wird. Nach 600 $\mu$s, d.h. nach 24 Vergleichszyklen, gibt dieser Zähler ein Signal "Kanalwechsel" ab, welches an die Umschalteinrichtungen 48 und 50 gelangt.

Zur Auswahl des grössten Korrelationswertes aus den 192 für je einen Kanal im Speicher 46 akkumulierten Werten dient ein Vergleicher 56. Dieser Vergleicher gibt an seinem Ausgang $X''$ den grösseren der jeweils seinen beiden Eingängen $A''$ und $B''$ zugeführten Werte ab. (Wenn beide gleich sind, wird der Wert vom Eingang $B''$ zum Ausgang übertragen). Ausserdem gibt er auf einer besonderen Leitung einen Steuerimpuls ab, wenn $A''>B''$. Der Eingang $A''$ ist über die Umschalteinrichtung 48 mit dem Ausgang jeweils einer Hälfte des Speichers 46 verbunden (und zwar derjenigen, die gerade nicht mit dem Addierer verbunden ist). Vom Ausgang $X''$ führt eine Verbindung sowohl zurück zum Eingang $B''$ als zu einem Dateneingang des Ergebnisspeichers 16.

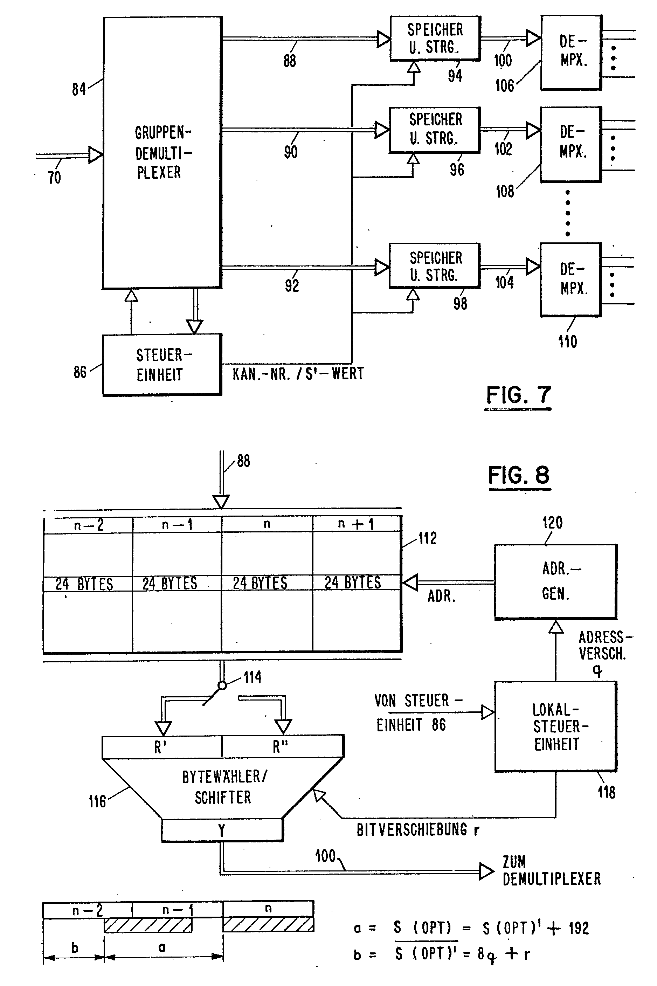

Der Ergebnisspeicher 16 hat zwei Blöcke zu je 10 Byte-Speicherplätzen zur Aufnahme der optimalen Verschiebungswerte $S(OPT)'$ und der maximalen Korrelationswerte $C(MAX)$ für die zehn Eingangskanäle. (Die in Klammern verwendeten Bezeichnungen MAX und OPT sind hier als Index zu verstehen und nicht als unabhängige Variable.) Der Dateneingang für die eine Speicherhälfte ($S'$-Werte) ist mit dem Ausgang des Adressgenerators 52 verbunden, der Dateneingang für die andere Speicherhälfte (C-Werte) mit dem $X''$-Ausgang des Vergleichers 56. Adressiert wird jeweils ein Paar von Bytestellen durch einen Adresszähler 58, der zyklisch nacheinander je eine von zehn möglichen Adressen abgibt, und jeweils durch einen Ausgangsimpuls des Modulo-24-Zählers 54 ("Kanalwechsel") weitergeschaltet wird. Ausserdem ist der Speicher mit der Leitung für das Steuersignal $A''>B''$ verbunden. Bei Auftreten eines solchen Steuerimpulses wird die gerade vom Adressgenerator eines solchen Steuerimpulses wird die gerade vom Adressgenerator 52 abgegebene Adresse als $S'$-Wert in die von der Adressschaltung 58 adressierte Speicherstelle eingeschrieben. Der Ausgang des Ergebnisspeichers 16 ist mit einem Sammelspeicher verbunden, der später im Zusammenhang mit Fig. 7 erläutert wird.

Funktionsweise des Korrelators

Wie bereits erwähnt, wird der in Fig. 5 gezeigte Korrelator im Zeitmultiplexbetrieb für zehn Eingangskanäle benützt. Es wird jeweils für ein Sprachsegment (6ms Zeitrahmen) eines Eingangskanals die Korrelation vollständig durchgeführt, bevor der nächste Kanal bearbeitet wird.

Für einen Kanalvergleichszyklus oder kurz "Kanalzyklus" stehen also 600 $\mu$s (ein zehntel der Rahmenperiode) zur Verfügung. In dieser Zeit müssen die Teilkorrelationswerte für die 24 Bytes des vorliegenden Segments ermittelt und akkumuliert werden. Für einen Byte-Vergleichszyklus oder kurz "Byte-Zyklus" stehen also 25 $\mu$s (1/24 der Kanalzykluszeit) zur Verfügung. In jedem Bytezyklus muss das betreffende Byte mit 192 verschiedenen, je 8 Bit umfassenden Ausschnitten aus den älteren, gespeicherten Sprachsegmenten des gleichen Kanals verglichen werden. Für jeden Elementarvergleich stehen also etwa 130 ns (Frequenz 7680 KHz) zur Verfügung.

Zuerst wird das Byte B1 (n) CH.1 (d.h. das erste der 24 Bytes des Zeitrahmens n für Kanal 1) ins Register 32 eingelesen, um dort für 192 Elementarvergleiche (25 $\mu$s) zu verbleiben. Gleichzeitig werden die Bytes B1 (n—2) CH.1 und B2 (n—2) CH.1 in die Schieberegister 36 und 38 eingegeben. Die Inhalte des Registers 32 und des Schieberegisters 36 werden verglichen, das Ergebnis (eine die Anzahl übereinstimmender Bits angebende Zahl zwischen 0 und 8) erscheint am Eingang $A'$ des Addierers 44. Der Adressgenerator 52 gibt zunächst die Adresse 192 ab, so dass am Eingang $B'$ der Inhalt von Platz 192 des linken Speicherteils erscheint (vorläufig noch null, später der bis dahin akkumulierte Wert). Das Ergebnis vom Ausgang $X'$ wird in den Speicherplatz 192, linke Hälfte, eingelesen.

Beim Speicher 46 wird innerhalb einer Elementarvergleichszeit von ca. 130 ns mit der vorliegenden Adresse zuerst eine Leseoperation und dann eine Schreiboperation ausgeführt. Zur Zeitsteuerung dienen die um je ein halbes Intervall verschobenen Taktsignale C1 und $\overline{\text{C1}}$.

8

# 0 010 600

Die Speicherplätze 192...001 sind den Verschiebungswerten S von 384 bis herab zu 193 zugeordnet (d.h. den hormierten Verschiebungswerten S' von 192 bis herab zu 001). Die beiden zuerst verglichenen 8-Bit-Gruppen sind 12 ms, also 384 Bit voneinander entfernt.

Durch das Taktsignal C1 wird nach 103 ns der Inhalt der Schieberegister 36 und 38 um ein Bit nach links verschoben. Gleichzeitig wird die Adresse im Adressgenerator 52 um eines vermindert auf 191. Der nächste Vergleich findet statt, und das Ergebnis wird zum Inhalt des Speicherplatzes 191 addiert, welcher der Bitverschiebung S=383 (bzw. S'=191) zugeordnet ist.

Nach acht Vergleichsoperationen steht der ursprüngliche Inhalt vom Schieberegister 38 nun im schieberegister 36, und das Schieberegister 38 wird mit dem aus dem Eingangsspeicher 12 entnommenen Byte B3 (n−2) CH.1 geladen.

Durch das Nachladen des Schieberegisters 38 mit je einem neuen Byte nach jeweils acht Elementarvergleichszeiten (also Nachladen alle ca. 1,04 μs mit Taktsignal C2) wird eine fortlaufende Verschiebung des Vergleichsfensters von acht Bit Breite um insgesamt 192 Bitpositionen möglich. Beim letzten Vergleich mit dem im Register 32 stehenden Byte B1 (n) CH.1 wird das Teilergebnis in den Speicherplatz 001 eingeschrieben, welcher der Verschiebung S=193 (bzw. S'=001) zugeordnet ist.

Nunmehr beginnt der zweite "Bytezyklus" durch Laden des Bytes B2 (n) CH.1 ins Register 32, wo es für 25 μs oder 192 Vergleiche stehen bleibt, gleichzeitig werden die Bytes B2 (n−2) CH.1 und B3 (n−2) CH.1 in die Schieberegister 36 und 38 eingegeben. Der Adressgenerator 52 beginnt gleichzeitig wieder mit der Adresse 192. Dann erfolgen 192 Elementarvergleiche wie oben beschrieben, während 23 Bytes ins Schieberegister 38 nachgeladen und die 192 Speicherstellen im Speicher 46 adressiert werden.

Nach insgesamt 24 Bytezyklen oder 4608 Elementarvergleichen enthält der Speicher 46 die 192 Korrelationswerte, die dem Vergleich des Segments n vom Kanal Nr. 1 mit 192 verschiedenen Fensterausschnitten aus den beiden gespeicherten älteren Segmenten entsprechen.

Zur Ermittlung des maximalen Korrelationswertes und der zugehörigen optimalen Verschiebung S (bzw. der normierten Verschiebung S'), welche dem im Sprachsignal enthaltenen Grundton entspricht, erfolgt nun eine Umschaltung durch das Ausgangssignal "Kanalwechsel" vom Modulo-24-Zähler 54. Daraufhin wird der Ausgang der linken Hälfte des Speichers 46 mit dem Vergleicher 56 verbunden. Gleichzeitig wird die rechte Hälfte des Speichers 46 mit dem Addierer 44 verbunden, so dass im folgenden, 600 μs dauernden "Kanalzyklus" die Korrelationsdaten des Kanals 2 (bzw. des Kanals K+1) in dieser Speicherhälfte akkumuliert werden können. Gleichzeitig wird aus den in der linken Speicherhälfte vorhandenen Korrelationswerten des Kanals 1 (bzw. des Kanals K) mit Hilfe des Vergleichers 56 das Maximum ausgewählt.

Infolge sequentieller Adressierung durch den Adressgenerator 52 wird ein Wert nach dem anderen zum Eingang A″ des Vergleichers 56 übertragen. Während des ganzen Kanalzyklus wählt die Adressschaltung 58 im Ergebnisspeicher 16 das dem Kanal 1 (bzw. Kanal K) zugeordnete Bytepaar. In diesem Speicherplatzpaar steht der jeweils ermittelte maximale Korrelationswert und der zugehörige normierte Verschiebungswert S' (welcher der Adresse des Korrelationswertes im Speicher 46 entspricht). Wenn jeweils der nächste Korrelationswert am Eingang A″ erscheint, wird er mit dem bisherigen Maximum, welches am Eingang B″ vorliegt, verglichen. Ist der neue Korrelationswert grösser, erscheint er am Ausgang X″ und am Eingang B″ und wird ausserdem mitsamt seiner bisherigen Adresse, d.h. dem zugehörigen S'-Wert, das bisherige Wertepaar im Speicher 16 ersetzen. Andernfalls bleiben die vorherigen Werte im Speicher 16 und am Eingang B″ erhalten. Am Schluss des Kanalzyklus enthält der dem Kanal 1 zugeordnete Doppelplatz im Speicher 16 dei Werte C(MAX) und S(OPT)' für das n-te Segment (n-ter Zeitrahmen) vom Kanal 1.

In gleicher Weise wie beschrieben werden im Laufe von 10 Kanalzyklen, also innerhalb einer Zeitrahmendauer von 6 ms, im Ergebnisspeicher 16 die normierten optimalen Verschiebungszeiten S(OPT)' und die zugehörigen Korrelationswerte C(MAX) für das zuletzt empfangene 6ms-Sprachsignalsegment jedes der zehn betroffenen Kanäle gesammelt. Diese können nun zur erfindungsgemässen Redundanzreduktion durch selektives Auslassen von Sprachsegmenten bei der Uebertragung verwendet werden.

## Senderanordnung und selektive Segmentunterdrückung

Eine Senderanordnung zur Zusammenfassung einer Vielzahl von Eingangs-Sprachkanälen auf einen gemeinsamen Uebertragungskanal, in der die vorliegende Erfindung zur Anwendung kommt, ist in Fig. 6 in Blockform gezeigt.

Eine Mehrzahl von Busleitungen 60, 62, 64, deren jede von einem Eingangsspeicher 12 (Fig. 3) kommt und die deltacodierten Sprachsignale für zehn Eingangkanäle im Zeitmultiplex überträgt, ist mit einem Gruppenmultiplexer 66 verbunden. Dieser wird von einer Steuereinheit 68 gesteuert und fasst die Signale für die beispielsweise sechs Gruppen von je zehn Kanälen zur Uebermittlung auf einer Uebertragungsbusleitung, im folgenden kurz Fernleitung 70 genannt, zusammen. Auch auf der Fernleitung sind die Signale in Zeitrahmen von je 6 ms organisiert, wobei jeder Rahmen einen Kopfteil mit Steuer-und Zustandsinformationen enthält.

9

0 010 600

Damit die Kanalanzahl auf der Fernleitung 70 kleiner sein kann als die Summe der Kanäle auf den Busleitungen 60 . . . 64, kann der Gruppenmultiplexer entsprechende Konzentrationseinrichtungen enthalten. Wenn nun trotz dieser Einrichtungen die Kapazitätsgrenze erreicht ist, so dass Signale aus Eingangskanälen zurückgewiesen werden müssten oder durch sogenannten "freezeout" beschnitten würden, kann mit Hilfe der Erfindung zusätzliche Uebertragungskapazität freigemacht werden. Das erfindungsgemässe Verfahren kann aber auch unabhängig von solchen Konzentrationseinrichtungen alleine für sich zur Redundanzverminderung eingesetzt werden.

Jede Kanalgruppe hat eine Korrelationseinrichtung 72, 74, 76 mit einem Ergebnisspeicher entsprechend Fig. 3 und Fig. 5. Ein Gemeinsamer Gruppenspeicher 78 nimmt die Inhalte, d.h. die Werte C(MAX) und S(OPT)', aller Ergebnisspeicher für je einen Zeitrahmen auf. Eine Sortier- und Auswahleinheit 80 nimmt eine Sortierung aller Korrelationswerte nach deren Grösse vor und erzeugt in einem Listenspeicher 82 eine Liste von Kanalnummern und zugehörigen normierten Verschiebungswerten S(OPT)' nach absteigendem Korrelationswert. In dieser Liste stehen also die zur Unterdrückung eines Sprachsignalsegments am besten geeignetsten Kanäle am weitesten oben. Die Liste wird nach jedem Zeitrahmen erneuert.

Wenn nun die Steuereinheit 68 des Gruppenmultiplexers 66 einen zusätzlichen Kanakbedarf feststellt, sendet sie ein Anforderungssignal, welches auch die Anzahl erforderlicher Kanäle angibt, an die Sortier- und Auswahleinheit 80. Diese entnimmt die entsprechende Anzahl Kanaladressen und zugehörige Verschiebungswerte dem Listenspeicher 82 und gibt diese an die Steuereinheit 68 ab. Diese setzt die Kanalnummern und S(OPT)'-Werte der zu unterdruckenden Segmente in den Kopfteil des nächsten Rahmens ein, setzt, dagegen die entsprechenden Sprachsegmente selber nicht in den nächsten Rahmen ein.

Die Zuordnung zwischen Eingangskanälen (auf Busleitung 60, 62, 64) und Fernleitungskanälen, welche sich von Rahmen zu Rahmen ändern kann, sowie die entsprechende Signalisierung, z.B. durch eine Zuordnungsmaske im Rahmen-Kopfteil brauchen hier nicht dargestellt zu werden, da sie beispielsweise in den eingangs genannten US—Patents Schriften 4 032 719 und 4 009 343 ausführlich beschrieben sind.

Von einem Sprachsignal sollte möglichst nur jedes dritte segment unterdrückt werden, da im Empfänger jeweils die zwei vorhergehenden Segmente zur Wiederherstellung eines unterdrückten Segments benötigt werden. Die Sortie- und Auswahleinheit 80 lässt deshalb jeden Kanal, der zur Unterdrückung ausgewählt wurde, in den nächsten beiden Rahmenzyklen bei der Sortierung aus, so dass er gar nicht im Listenspeicher 82 zur Auswahl erscheint.

Im folgenden Plan ist angegeben, in welchem Zustand und wo sich die Daten aus vier aufeinanderfolgenden Zeitrahmen während eines Rahmenzyklus in der Sendeanordnung befinden. Der Verarbeitungsablauf ist so organisiert, dass im Gruppenmultiplexer 66 die eigentlichen Sprachsegmente und die zugehörigen Auswahldaten zur selektiven Unterdrückung von einzelnen Segmenten miteinander verfügbar sind.

Die Zeitverhältnisse bei der Speicherung, Korrelationsauswertung und Weitergabe der Sprachsignalsegmente sind folgendermassen:

— Für Rahmen n+1: Einspeicherung in die Eingangsspeicher 12;
— Für Rahmen n: Korrelationsauswertung und Sammlung der Werte in der Ergebnisspeichern 16;
— Für Rahmen n—1: Uebertragung aller Ergebnisdaten in den Gruppenspeicher 78, Erstellung der nach Korrelationswert sortierten Liste und Eingabe in den Listenspeicher 82;
— Für Rahmen n—2: Anforderung zusätzlicher Kanäle durch Steuereinheit 68; Entnahme der Kanaldaten für die geeignetsten Kanäle aus dem Listenspeicher 82 und Abgabe an die Steuereinheit 68 zur Erstellung des Rahmenkopfes für die Fernleitung; bei Entnahme der Sprachsignalbytes aus den Eingangsspeichern 12 jeweils Uebernahme in Pufferspeicher des Gruppenmultiplexers 66.

Alle diese angegebenen Operationen werden innerhalb eines Rahmenzyklus durchgeführt.

Empfängeranordnung und Wiedereinsetzen unterdrückter Sprachsegmente

In Fig. 7 ist in Blockform eine Empfängeranordnung gezeigt, mit der die im Zeitmultiplex über eine Fernleitung übertragenen Signale wieder auf mehrere Gruppen verteilt werden. Die Fernleitung 70 führt zu einem Gruppendemultiplexer 84 mit Steuereinheit 86, welcher die in Rahmen von je 6 ms Dauer empfangenen Sprachsignalsegmente auf mehrere Busleitungen 88, 90 und 92 verteilt. Jede Busleitung ist mit einer Speichereinrichtung 94, bzw. 96, 98 verbunden, die eine Kapazität von mindestens 960 Byte hat, so dass für 10 Kanäle je 4 Sprachsegmente zu 24 Bytes gespeichert werden können. Jede der Speichereinrichtungen, von denen eine in Fig. 8 genauer gezeigt, ist, enthält ausserdem Steuereinrichtungen, die über besondere Leitungen mit der Steuereinheit 86 des Gruppendemultiplexers verbunden sind.

Ueber Ausgangsbusleitungen 100, 102, 104 sind die Speicher mit Demultiplexern 106, 108, 110 verbunden, deren jeder 10 Ausgänge für je einen Kanal hat. Für jeden einzelnen Ausgangskanal sind noch Pufferregister und ein Decodierer vorgesehen, die aber hier nicht dargestellt sind.

Die Steuerinformation aus dem Kopfteil jedes eintreffenden Rahmens wird in die Steuereinheit 86

10

eingegeben, welche aufgrund der Kanalbelegungsmaske die jeweilige Zuordnung zwischen Fernleitungskanälen und Kanälen auf den Busleitungen 88, 90, 92 erkennt und den Gruppendemultiplexer entsprechend ansteuert. Die Vorgänge müssen im einzelnen nicht beschriben werden, da Beispiele hierfür in den eingangs genannten US—Patentshriften 4 032 719 und 4 009 343 beschriben sind. Für jeden Kanal, aus dem ein Sprachsegment unterdrückt wurde, wird die entsprechende Kanalnummer und der zugehörige normierte optimale Verschiebungswert S(OPT)' an die Speichereinrichtung der betreffenden Kanalgruppe weitergeleitet.

Das Wiedereinsetzen unterdrückter Sprachsegmente aufgrund dieser Information wird anhand von Fig. 8 beschrieben.

Ein Speicher 112 mit einer Kapazität von 960 bzw. 1024 Bytes ist an die Busleitung 88 angeschlossen. Sein Ausgang ist über eine Umschalt/Auswahleinheit 114 mit einem Bytewähler/Schifter 116 verbunden. Dieser hat zwei 8-Bit-Eingangsregister R' und R", und gibt eine aus diesen Registern ausgewählte 8-Bitgruppe (Fenster) an ein Ausgangsregister Y, das mit der Busleitung 100 zum Demultiplexer 106 verbunden ist. Der Schiebebetrag zur Auswahl des Fensters (eine Zahl zwischen 0 und 8) wird über eine Steuerleitung von einer lokalen Steuereinheit 118 in den Bytewähler/Schifter 116 eingegeben. Die lokale Steuereinheit ist auch mit einem Adressgenerator 120 verbunden, welcher die Schreib- und Leseadressen für den Speicher 112 erzeugt.

Der Ablauf ist wie folgt: Während in die Speicherplätze für den Rahmen n+1 neu empfangene Bytes eingespeichert werden, werden aus den Speicherplätzen für den Rahmen n die Bytes ausgelesen. Die Addressierreihenfolge ist dabei wieder für Einschreiben und Auslesen verschieden, wie es in Fig. 4 dargestellt ist.

Wenn nun ein Segment nicht übertragen wurde und deshalb im Speicherblock für den Rahmen n fehlt, muss es durch einen aus den Speicherblöcken für Rahmen (n−2) und (n−1) entnommenen Signalausschnitt (Fenster) ersetzt werden, wobei zur Auswahl der empfangene Wert S(OPT)' dient. Wie in Fig. 8 gezeigt, gibt S(OPT)=S(OPT)'+192 die Verschiebung zwischen dem fehlenden Segment und dem gewünschten Ersatzsegment (Signalausschnitt aus zwei älteren Segmenten) an, während das Komplement $\overline{S(OPT)}'$ den Abstand des Ersatzsegmentes von der linken Segmentgrenze angibt. Dieser Abstand (8-Bit-Wort) enthält einen Wert q (die ersten 5 Bits) zur Auffindung des Anfangsbytes sowie einen Wert r (die 3 letzten Bits) zur Angabe des Startbits innerhalb des gewählten Byte. Zur Gewinnung eines Ersatzbytes Y beim Auslesen entnimmt man zunächst zwei aufeinanderfolgende Bytes B(k) und B(k+1) den Speicherbereichen für B(n−2) bzw. B(n−1), wobei zur Adressierung die lokale Steuereinheit den Byteadresswert q an den Adressgenerator 120 gibt. Aus diesen beiden Bytes in R' und R" wählt der verdrahtete Bytewähler/Schifter 116 eine 8-Bit-Gruppe aus (Y), die als ein Teil des Ersatzsegmentes auf Busleitung 100 gelangt. Zur Vereinfachung der Steuerung werden auch die normalen Bytes aus dem Speicherblock n über den Bytewähler/Schifter 116 geführt. Dabei werden jedoch die Werte q=0 und r=0 benützt, so dass das ausgelesene Byte direkt ins 8-Bit-Eingangsregister R' gelangt und von dort ins Ausgangsregister Y weitergegeben wird.

Es gilt also die Regel: wurde für einen Kanal ein Segment tatsächlich übertragen, so wird zum Auslesen im Bereich n adressiert, wobei q=0 und r=0. Wurde ein Segment nicht übertragen und muss deshalb im Empfänger ersetzt werden, so wird im Bereich n−2 bzw. n−1 adressiert mit dem Verschiebewert $8q+r=\overline{S(OPT)}'$.

Für das Einschreiben eines neuen und das Auslesen eines Doppelbytes (zwecks Gewinnung eines einzelnen verschobenen Bytes) steht jeweils ein Speicherzyklus ("Bytezyklus") von 25 $\mu$s zur Verfügung, damit innerhalb eines Rahmenzyklus von 6 ms für alle 10 Kanäle der Gruppe 24 Bytes eingelesen und 24 Bytes wiedergewonnen werden können. In einem Bytezyklus (25 $\mu$s) müssen also zwei Lesezugriffe und ein Schreibzugriff im Speicher 112 ausgeführt werden.

Normierung und Codierung

Für das Ausführungsbeispiel ist angenommen, dass jedes Sprachsignal durch einen adaptiven Deltamodulator codiert wird. Durch die adaptive Deltacodierung ergeben sich im wesentlichen gleiche Bitfolgen für gleiche Signalformen, auch wenn die Signale gleicher Form unterschiedliche Amplituden haben. Deshalb erübrigt sich eine Normierung der Signale vor der Korrelation.

Das Prinzip der Erfindung ist aber nicht nur mit Deltamodulation, sondern auch mit anderen Codierungsarten verwendbar, z.B. mit PCM (Pulscodemodulation). Gegebenenfalls ist vor der Korrelation nach dem erfindungsgemässen Verfahren aber eine Normierung erforderlich, falls sich diese nicht ohnehin durch die gewählte Codierungsart ergibt.

**Patentansprüche**

1. Verfahren zur codierten Uebertragung von Sprachsignalen, bei welchem durch Vergleich einander ähnliche Abschnitte innerhalb eines Sprachsignals ermittelt und bei welchem ausgewählte Abschnitte eines Sprachsignals nicht übertragen und am Empfangsort durch vorangehende, gespeicherte ähnliche Abschnitte des gleichen Sprachsignals ersetzt werden, dadurch gekennzeichnet, das für ein Sprachsignal

(a) im Sender:

— periodisch ein néues, codiertes Sprachsegment fester zeitlicher Länge entsprechend einer Rahmenperiode eines System-Zeitrasters erzeugt wird, wobei mindestens die beiden letzten vorher erzeugten Sprachsegmente gespeichert bleiben,

— für jedes neue, codierte Sprachsegment festgestellt wird, welches der ähnlichste Signalausschnitt von gleicher Länge wie ein Sprachsegment innerhalb der vorhergehenden Sprachsegmente ist, und welches dessen zeitliche Verschiebung gegenüber dem neuen Sprachsegment ist,

— bei der Uebertragung jeweils ein ganzes, einer Rahmenperiode entsprechendes Sprachsegment wahlweise unterdrückt wird und statt dessen eine Angabe über die zeitliche Verschiebung des ähnlichsten vorangegangenen Signalausschnitts gleicher Länge übertragen wird,

(b) im Empfänger:

— mindestens die beiden jeweils vorhergehenden Sprachsegmente gespeichert bleiben und ein unterdrücktes Sprachsegment aufgrund der empfangenen zeitlichen Verschiebungsangabe durch den ähnlichsten vorangegangenen Signalausschnitt gleicher Länge aus den im Empfänger gespeicherten Sprachsegmenten ersetzt wird (Fig. 1, Fig. 2).

2. Verwendung des Verfahrens nach Patentanspruch 1 in einem Zeitmultiplex-Uebertragungssystem, wobei jeweils die Sprachsignale mehrerer Kanäle zu einer Gruppe zusammengefasst werden, dadurch gekennzeichnet, dass für jedes Sprachsignal einer Gruppe ein Korrelationswert als Mass für die Aehnlichkeit zwischen dem jeweils neuen, codierten Sprachsegment und dem ähnlichsten vorangegangenen Signalausschnitt gleicher Länge erzeugt und gespeichert wird, dass die Korrelationswerte aller Sprachsignale einer Gruppe miteinander verglichen werden, und dass in jeder Zeitmultiplexperiode beim Sprachsignal mit dem gerade höchsten Korrelationswert oder bei einigen Sprachsignalen mit den gerade höchsten Korrelationswerten der Gruppe je ein Sprachsegment bei der Uebertragung unterdrückt und statt dessen ein entsprechender zeitlicher Verschiebungswert übertragen wird.

3. Anordnung zur Durchführung des Verfahrens nach Patentanspruch 1, dadurch gekennzeichnet, dass sie für eine Mehrzahl von Eingangskanälen (CH.1 . . .CH.10) eine gemeinsame Korrelationseinrichtung (14) mit Eingangsspeicher (12) zur Speicherung je mehrerer aufeinanderfolgender Sprachsegmente einer Mehrzahl von Sprachsignalen und mit Ergebnisspeicher (16) zur Speicherung je einer zeitlichen Verschiebungsangabe (S(OPT)′) und eines zugehörigen, ein Mass der Aehnlickkeit angebenden Korrelationswertes (C(MAX)) für die Mehrzahl von Sprachsignalen enthält, wobei die gemeinsame Korrelationseinrichtung (14) Schaltungen (30. . .56) aufweist zum schrittweisen Vergleich eines Sprachsegments jedes der Sprachsignale mit einer Vielzahl gleichlanger, gegeneinander verschobener Signalausschnitte aus vorhergehenden, gespeicherten Sprachsegmenten des jeweils gleichen Sprachsignals, sowie zur Ermittlung eines maximalen Korrelationswertes (C(MAX)) und der zugehörigen zeitlichen Verschiebungsangabe (S(OPT)′) für jedes der Mehrzahl von Sprachsignalen in jeder Rahmenperiode des System-Zeitrasters, und zur jeweiligen Speicherung dieser Angaben im Ergebnisspeicher (16).

4. Anordnung nach Patentanspruch 3, dadurch gekennzeichnet, dass die Korrelationseinrichtung (14) ein Register (32) zur Aufnahme eines Unterabschnitts eines neuen Sprachsegments und zwei miteinander verbundene Schieberegister (36, 38) zur Aufnahme zweier aufeinander folgender gleich langer Unterabschnitte vorangehender Sprachsegmente aus dem Eingangsspeicher (12) aufweist, sowie einen Vergleicher (30), dessen Eingänge (A, B) mit dem Register (32) einerseits und einem der beiden Scheiberegister (36) andererseits verbunden sind und der an seinem Ausgang (X) eine Angabe über die Anzahl übereinstimmender Bits der beiden an seinen Eingängen (A, B) vorliegenden Unterabschnitte abgibt, wobei durch gemeinsame Verschiebung des Inhalts beider Schieberegister (36, 38) jeweils ein anderer Teil des ursprünglichen Inhalts beider Schieberegister (36, 38) dem zweiten Eingang (B) des Vergleichers (30) zugeführt wird, und wobei jeweils nach Verschiebung um eine ganze Unterabschnitts- oder Schieberegisterlänge in das nicht mit dem Vergleicher (30) verbundene Schieberegister (38) ein nachfolgender Unterabschnitt aus dem Eingangsspeicher (12) nachgeladen werden kann.

5. Anordnung nach Patentanspruch 3 oder 4, dadurch gekennzeichnet, dass die Korrelationseinrichtung (14) eine Zwischenspeichervorrichtung (46, 48, 50) enthält, um für jeweils eines der Mehrzahl von sprachsignalen eine Vielzahl von Korrelationswerten (C) für eine entsprechende Vielzahl von unterschiedlichen Verschiebungswerten (S′) zu kumulieren, sowie eine Vergleichseinrichtung (56), die mit der Zwischenspeichervorrichtung und dem Ergebnisspeicher (16) verbunden ist, um mittels einer Vielzahl von Vergleichsoperationen den grössten (C(MAX)) der kumulierten Korrelationswerte auszuwählen und zusammen mit der zugehörigen Verschiebungswertangabe (S(OPT)′) welche der Zwischenspeicheradresse des betreffenden Korrelationswertes entspricht, im Ergebnisspeicher (16) an einem dem betreffenden Sprachsignal zugeordneten Platz abzuspeichern.

6. Anordnung nach Patentanspruch 5, dadurch gekennzeichnet, dass mit dem Ausgang (X) des Vergleichers (30) und mit einem Ausgang des Zwischenspeichers (46) ein Addierer (44) verbunden ist, dass der Ausgang des Addierers (44) mit einem Eingang des Zwischenspeichers (46) verbunden ist, und dass ein als umlaufender Zähler ausgebildeter Adressgenerator (52) für den Zwischenspeicher (46) vorgesehen ist, so dass im Zwischenspeicher (46) enthaltene kumulierte Korrelationswerte nacheinander ausgelesen und mit nacheinander aus dem Vergleicher anfallenden Teilkorrelationswerten addiert und die Ergebnisse in die entsprechenden Plätze des Zwischenspeichers (46) wieder eingegeben werden können.

7. Anordnung nach Patentanspruch 6, dadurch gekennzeichnet, dass die Zwischenspeichervorrichtung (46, 48, 50) einen Speicher (46) mit zwei gleichen Speicherbereichen aufweist sowie Umschalteinrichtungen (48, 50), mittels deren jeweils einer der Speicherbereiche mit dem Addierer (44) und der andere Speicherbereich mit der Vergleichseinrichtung (56) zur Auswahl des grössten Korrelationswertes verbunden werden kann.

## Claims

1. A method of coded transmission of speed signals, in which similar sections within a speech signal are detected by comparison and in which selected portion of a speech signal are not transmitted and are replaced in the receiver by stored previous similar portions of the same speech signal, characterized in that for a speed signal:

(a) in the transmitter:

— a new coded speech segment of fixed duration corresponding to the frame period of a time raster is generated periodically, while at least the two next-previous speech segments are kept in storage,
— for each newly coded speech segment, the most similar signal subsection of speech segment length within the previous speech segments, and its temporal offset, both with respect to the new speech segment, are determined,
— for transmission, selectively a whole speech segment corresponding to one frame period is selectively suppressed and instead an indication of the temporal offset of the most similar previous signal subsection of equal length is transmitted.

(b) in the receiver:

— at least the two next-previous speech segments are kept in store and a suppressed speech segment is replaced by the most similar previous signal subsection of the stored speech segments in response to the received temporal offset indication (Fig. 1, Fig. 2).

2. An application of the method according to claim 1, to a time division multiplex transmission system, the speech signals of a plurality of channels being combined in a group, characterized in that for each speech signal of a group a correlation value which is a measure for the similarity between the newest coded speech segment and the most similar previous signal subsection of equal length is generated and stored, that said correlation values of all speech signals of a group are compared to each other and that within each time division multiplex period, a speech segment is suppressed during transmission for the speech signal having the highest correlation value or for each of a plurality of speech signals having the highest correlation values in the group, and that instead (of the speech segment) a respective temporal offset value is transmitted.

3. Apparatus for executing the method according to claim 1, characterized in that, for a plurality of speech signal input channels (CH.1 . . .CH.10), common correlation means (14) are provided comprising an input storage (12) for storing a plurality of successive speech segments for each of a plurality of speech signals, and a result storage (16) for storing, for each of the plurality of speech signals, a temporal offset value (S(OPT)') and an associated correlation value (C(MAX)') constituting a measure of similarity, said common correlation means (14) including circuitry (30 . . .56) for stepwise comparison of a speech segment of each speech signal with a multiplicity of equally long signal subsections which are shifted with respect to each other and which are taken from previous stored speech segments of the same speech signal, and for determining the maximum correlation value (C(MAX)) and the corresponding temporal offset (S(OPT)') for each of the plurality of speech signals within each frame period of the time raster, and for storing of these values in the result storage (16).

4. Apparatus according to claim 3, characterized in that said correlation means (14) comprises a register (32) for receiving a subsegment of a new speech segment, and two interconnected shift registers (36, 38) for receiving, from said input storage (12), two subsequent and equally long subsegments of previous speech segments, and that it further comprises comparing means (30) the inputs (A, B) to which are connected, on one hand, to said register (32) and, on the other hand, to one (36) of said two shift registers and which furnishes at its output (X) an indication of the number of equal

# 0 010 600

bits in the two subsegments at its inputs (A, B), so that, due to simultaneous shifting of the contents of both shift registers (36, 38), each time a different portion of the original contents of both shift registers (36, 38) is applied to the second input (B) of said comparing means (30), and that, each time a whole subsegment of shift register length has been shifted through, a subsequent subsegment can be loaded from said input storage (12) into that shift register (38) which is not connected to said comparing means (30).

5. Apparatus according to claim 3 or 4, characterized in that said correlation means (14) comprises intermediate storage means (46, 48, 50) for accumulating, for one of the plurality of speech signals, a multiplicity of correlation values (C) for a corresponding multiplicity of different offset values (S'), and that it further comprises comparing means (56) which are connected to said intermediate storage means and said result storage (16) for selecting, by a number of compare operations, the greatest (C(MAX)) of the accumulated correlation values and for storing it, together with the associated offset value (S(OPT)') which corresponds to the address of said greatest correlation value in said intermediate storage, in said result storage (16) in a location associated with the respective speech signal.

6. Apparatus according to claim 5, characterized in that adding means (44) are connected to the output (X) of said comparing means (30) and to the output of said intermediate storage means (46), that the output of said adder (44) is connected to an input of said intermediate storage means (46), and that an address generator (52), in the form of a wrap-around counter, is provided for the intermediate storage means (46), so that accumulated correlation values contained in the intermediate storage (46) can be read out successively and can be added to partial correlation values furnished by said comparing means, and that the results can be reentered into the respective locations of the intermediate storage means (46).

7. Apparatus according to claim 6, characterized in that said intermediate storage means (46, 48, 50) includes a storage unit (46) comprising two equal storage areas, and switchover means (48, 50) by which one of the storage areas can be connected to the adder (44) and by which the respective other storage area can be connected to said comparing means (56) for selecting the greatest correlation value.

**Revendications**

1. Procédé pour la transmission codée de signaux de voix, dans lequel en détecte, par comparaison, des sections similaires dans un signal de voix et dans lequel on ne transmet pas certaines sections sélectionnées d'un signal de voix et on les remplace au récepteur par des sections similaires précédentes emmagasinées du même signal de voix, caractérisé en ce que pour un signal de voix:

(a) dans l'émetteur:

— on génère périodiquement un nouveau segment de voix codé d'une durée fixe selon une période de trame dans un système à trames répétitives, en gardant en mémoire au moins les deux derniers segments de voix générés précédemment,
— on détermine pour chaque nouveau segment de voix codé la portion de signal la plus similaire de même durée qu'un segment de voix à l'intérieur des segments de voix précédents et son décalage temporel par rapport au nouveau segment de voix,
— on supprime sélectivement pour la transmission un segment de voix entier correspondant à une période de trame et on transmet, à sa place, une indication concernant le décalage temporel de la portion de signal précédente la plus similaire de même durée,

(b) dans le récepteur:

— on garde en mémoire au moins les deux segments de voix précédents et on remplace un segment de voix supprimé par la portion de signal précédent la plus similaire de même durée provenant des segments de voix emmagasinés dans le récepteur en réponse à l'indication de décalage temporel reçu (figure 1, figure 2).

2. Utilisation du procédé selon la revendication 1, dans un système de transmission de multiplexage par répartition dans le temps, les signaux de voix de plusieurs canaux étant groupés, caractérisée en ce que pour chaque signal de voix d'un groupe on génère et emmagasine une valeur de corrélation servant de mesure pour la similarité entre le nouveau segment de voix codé et la portion de voix précédente la plus similaire de même durée, en ce qu'on compare les valeurs de corrélation de tous les signaux de voix d'un groupe, et en ce qu'on supprime, durant chaque période de multiplexage par répartition dans le temps, un segment de voix lors de la transmission pour le signal de voix ayant la valeur de corrélation la plus élevée ou pour quelques-uns des signaux de voix ayant les valeurs de corrélation les plus élevées du groupe, et qu'on transmet à la place une valeur de décalage temporel correspondante.

14

**0 010 600**

3. Ensemble pour réaliser le procédé selon la revendication 1, caractérisé en ce qu'il comporte pour plusieurs canaux d'entrée (CH.1...CH.10) un dispositif de corrélation commun (14) avec une mémoire d'entrée (12) pour emmagasiner plusieurs segments de voix successifs d'une pluralité de signaux de voix et avec une mémoire de résultat (16) pour emmagasiner une indication de décalage temporel (S(OPT)') et une valeur de corrélation (C(MAX)) associée indiquant une mesure de similarité pour la plupart des signaux de voix, ledit dispositif de corrélation commun (14) comporte des circuits (30...56) pour la comparaison pas-à-pas d'un segment de voix de chacun des signaux de voix avec une pluralité de sections de signal, décalées les unes par rapport aux autres et de même durée, provenant des segments des voix précédents emmagasinés du même signal de voix, et pour la détermination d'une valeur de corrélation maximale (C(MAX)) et de l'indication de décalage temporel associée (S(OPT)') pour chacun des signaux de voix dans chaque période de trame d'un système à trame répétitif ainsi que pour l'emmagasinage de ces indications dans la mêmoire de résultat (16).

4. Ensemble selon la revendication 3, caractérisé en ce que le dispositif de corrélation (14) comporte un registre (32) pour recevoir une sous section d'un nouveau segment de voix, et deux registres à décalage interconnectés (36, 38) pour recevoir deux portions successives de même durée de segments de voix précédents à partir de la mémoire d'entrée (12), et un comparateur (30) dont les entrées (A, B) sont connectés d'une part au registre (32) et d'autre part à l'un des deux registres à décalage (36) et dont la sortie (X) fournit une indication concernant le nombre de bits concordant des deux sous-sections présentes à ses entrées (A, B), le décalage commun du contenu des deux registres à décalage (36, 38) permettant d'appliquer à la seconde entrée (B) du comparateur (30) une autre partie du contenu initial des deux registres à décalage (36, 38), et une sous-section suivante pouvant être chargée à partir de la mémoire d'entrée (12) dans le registre à décalage (38) non connecté au comparateur (30) après décalage par une longeur entière de sous-section ou de registre à décalage.

5. Ensemble selon la revendication 3 ou 4, caractérisé en ce que le dispositif de corrélation (14) comporte un dispositif de mémoire temporaire (46, 48, 50) pour accumuler, pour chacun des signaux de voix choisis parmi plusieurs, une pluralité de valeurs de corrélation (C) pour une pluralité correspondante de différentes valeurs de décalage (S'), ainsi qu'un comparateur (56) connecté au dispositif de mémoire temporaire et à la mémoire de résultat (16) pour sélectionner, au moyen de plusieurs opérations de comparaison, la plus grande (C(MAX)) des valeurs de corrélation accumulées et pour l'emmagasiner avec l'indication de décalage associée (S(OPT)') correspondant à l'adresse de mémoire temporaire de la valeur de corrélation correspondante dans la mémoire de résultat (16) à un emplacement associé au signal de voix correspondant.

6. Ensemble selon la revendication 5, caractérisé en ce qu'un additionneur (44) est connecté à la sortie (X) du comparateur (30) et à une sortie de la mémoire temporaire (46), en ce que la sortie de l'additionneur (44) est connectée à une entrée de la mémoire temporaire (46), et en ce qu'un générateur d'adresses (52) formant un compteur à bouclage est prévu pour la mémoire temporaire (46) de telle sorte que des valeurs de corrélation accumulées dans la mémoire temporaire (46) peuvent être successivement lues et additionnées aux valeurs de corrélation partielles provenant successivement du comparateur et que les résultats peuvent être de nouveau emmagasinés aux emplacements correspondants de la mémoire temporaire (46).

7. Ensemble selon la revendication 6, caractérisé en ce que le dispositif de mémoire temporaire (46, 48, 50) comporte une mémoire (46) ayant deux régions de mémoire identiques et des commutateurs (48, 50) au moyen desquels l'une des régions de mémoire peut être connectée à l'additionneur (44) et l'autre région de mémoire au comparateur (56) pour sélectionner la valeur de corrélation la plus grande.

**0 010 600**

FIG. 1

FIG. 2

FIG. 3

CH.1 — DELTA-COD. 18(1)

20(1) REG.

22(1) REG.

CH.10 — DELTA-COD. 18(10)

20(10) REG.

22(10) REG.

MUL-TI-PLE-XER 24

STEUER-SIGNAL

EINGANGSSPEICHER 960 BYTES ( JE 4 x 24 BYTES FÜR 10 KANÄLE) 12

ADR.

ADRESS-GENERATOR 28

L/S STEUER-SIGNAL

FIG.5

KORRELATOR 14

ERGEBNIS-SPEICHER (20 BYTES) 16

ZUM GRUPPEN-SPEICHER

SONSTIGE STEUER-SIGNALE

26 STEUER-U. ZEITGEBER-EINHEIT

C1 7680 kHz

C2 960 kHz

C3 40 kHz

ZUM GRUPPEN-MULTIPLEXER

0010 600

0 010 600

FIG. 4

LESEN (HOLEN)

SCHREIBEN (SPEICHERN)

FIG. 6

3

FIG. 5

0010 600

**0 010 600**

FIG. 7

FIG. 8

$$a = \underline{S\ (OPT)} = S\ (OPT)' + 192$$
$$b = \overline{S\ (OPT)'} = 8q + r$$

5